(19) Europäisches Patentamt European Patent Office Office européen des brevets

(11) **EP 4 730 882 A1**

(12) **EUROPEAN PATENT APPLICATION**
published in accordance with Art. 153(4) EPC

(43) Date of publication:
**22.04.2026 Bulletin 2026/17**

(21) Application number: **24839862.0**

(22) Date of filing: **17.04.2024**

(51) International Patent Classification (IPC):
*H04W 64/00* (2009.01)    *H04W 24/08* (2009.01)
*G06N 3/09* (2023.01)    *G06N 3/045* (2023.01)
*G01S 5/02* (2010.01)    *G06T 7/70* (2017.01)
*G06N 3/02* (2006.01)    *H04B 17/27* (2015.01)
*H04B 17/309* (2015.01)

(52) Cooperative Patent Classification (CPC):
**G01S 5/02; G06N 3/02; G06N 3/045; G06N 3/09; G06T 7/70; H04B 17/27; H04B 17/309; H04W 24/08; H04W 64/00**

(86) International application number:
**PCT/KR2024/005148**

(87) International publication number:
**WO 2025/014045 (16.01.2025 Gazette 2025/03)**

(84) Designated Contracting States:
**AL AT BE BG CH CY CZ DE DK EE ES FI FR GB GR HR HU IE IS IT LI LT LU MC ME MK MT NL NO PL PT RO RS SE SI SK SM TR**
Designated Extension States:
**BA**
Designated Validation States:
**GE KH MA MD TN**

(30) Priority: **10.07.2023 KR 20230089439**
**08.08.2023 KR 20230103499**

(71) Applicants:
• **Samsung Electronics Co., Ltd.**
**Suwon-si, Gyeonggi-do 16677 (KR)**
• **Seoul National University R&DB Foundation**
**Seoul 08826 (KR)**

(72) Inventors:
• **KIM, Kyeongyeon**
**Suwon-si Gyeonggi-do 16677 (KR)**

• **SHIM, Byonghyo**
**Seoul 08826 (KR)**
• **KANG, Jinwhan**
**Suwon-si Gyeonggi-do 16677 (KR)**
• **KEUM, Inkook**
**Seoul 08826 (KR)**
• **KIM, Jinhong**
**Seoul 08826 (KR)**
• **SON, Jinwoo**
**Seoul 08826 (KR)**
• **AHN, Yongjun**
**Seoul 08826 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR ESTIMATING LOCATION OF USER EQUIPMENT IN WIRELESS COMMUNICATION SYSTEM**

(57) The present disclosure relates to a method and device for estimating the location of a user equipment in a wireless communication system. In particular, the method for a base station to estimate the location of a user equipment according to an embodiment of the present disclosure comprises the steps of: acquiring first estimation values indicating the distance and angle with respect to the user equipment on the basis of a signal received from the user equipment; generating a patch image vector including height information about an object around the base station from map data of an area around the base station; generating first input values, to be input to a first deep neural network trained to estimate the location of the user equipment, on the basis of a vector generated from the first estimation values and the patch image vector; inputting the first input values to the first deep neural network; and acquiring a location estimation value of the user equipment output from the first deep neural network.

**(Cont. next page)**

EP 4 730 882 A1

FIG.1

## Description

[Technical Field]

The disclosure relates to a method and a device for estimating a position of a UE in a wireless communication system.

[Background Art]

Existing methods for obtaining position information include a method using a global positioning system (GPS) satellite, a method using a wireless LAN, and a method using a signal exchange between a base station and a UE. The GPS method is difficult to use in places where GPS satellite signals cannot be received or where signal attenuation is significant, and the method using the wireless LAN is mainly used in a limited indoor space. However, the method using the signal exchange between the base station and the UE has been expected to enable global high-precision positioning in that already well-established cellular mobile communication infrastructure is utilized and communication is possible in most regions.

Despite these advantages in terms of universality, a wireless positioning technique based on a signal exchange between a base station and a UE in a 5G system has a plurality of disadvantages. In a 5G mobile communication environment, a large number of communication UEs exist, and interference signals may reduce the decoding rate and reliability of signals for position estimation. In addition, when signal strength attenuation may arise due to characteristics of high-frequency radio waves, or in a non-line-of- sight (NLoS) environment where a line-of-sight (LoS) path is unavailable, signal attenuation and transmission delays may reduce reliability in position estimation. Furthermore, when a plurality of relays is used, misalignment in synchronization of signals used for position estimation may result in cumulative errors in estimating the distance/position of a transmission point using reference signals received power (RSRP). These problems may be maximized in particular when an analytic method of deriving an optimal solution based on a mathematical model, which has been a main paradigm of existing mobile communication systems, is used. The analytical method has formed a mainstream of communication research due to advantages in mathematical rigor and ease of interpreting validity conditions in a process of obtaining a solution. However, in situations where different performance indicators are required, there has been a growing trend of studies applying unrealistic assumptions to simplify complex 5G and B5G systems.

Recently, technologies for estimating distance/angle and position by using a deep neural network investigated across various fields including wireless communication have been actively studied.

[Disclosure]

[Technical Solution]

According to an embodiment of the disclosure, a method in which a base station estimates a position of a terminal may include obtaining a first estimated value indicating a distance and an angle of a terminal, based on a signal received from the terminal, generating a patch image vector including height information about an object adjacent to the base station from map data of a surrounding area of the base station, generating a first input value to be input to a first deep neural network trained to estimate a position of the terminal, based on a vector generated from the first estimated value and the patch image vector, inputting the first input value to the first deep neural network, and obtaining an estimated position value of the terminal output from the first deep neural network.

A base station for estimating a position of a terminal disclosed herein may include a transceiver, a memory, and at least one processor, wherein the at least one processor may be configured, by executing instructions stored in the memory, to: obtain a first estimated value indicating a distance and an angle of a terminal, based on a signal received from the terminal, generate a patch image vector including height information about an object adjacent to the base station from map data of a surrounding area of the base station, generate a first input value to be input to a first deep neural network trained to estimate a position of the terminal, based on a vector generated from the first estimated value and the patch image vector, input the first input value to the first deep neural network, and obtain an estimated position value of the terminal output from the first deep neural network.

[Description of Drawings]

FIG. 1 is a block diagram of a base station that provides distance/angle and position estimation by using a received signal according to an embodiment of the disclosure.

FIG. 2 is a block diagram of a base station that provides distance/angle and position estimation by using a received signal according to an embodiment of the disclosure.

FIG. 3 is a diagram illustrating an example of a deep neural network in a distance/angle estimator according to an embodiment of the disclosure.

FIG. 4 is a diagram illustrating an example of a deep neural network in a UE position estimator according to an embodiment of the disclosure.

FIG. 5 is a graph illustrating a mean absolute error of an estimated distance/angle according to a signal-to-noise ratio according to an embodiment of the disclosure.

FIG. 6 is a graph illustrating a mean absolute error of an estimated position according to a signal-to-noise ratio according to an embodiment of the disclosure.

FIG. 7 is a flowchart illustrating an operation in which a base station estimates a UE position according to an embodiment of the disclosure.

FIG. 8 is a flowchart illustrating an operation in which a deep neural network in a UE position estimator estimates a UE position according to an embodiment of the disclosure.

FIG. 9 illustrates a structure of a base station according to an embodiment of the disclosure.

With regard to the description of the drawings, the same or like reference signs may be used to designate the same or like elements.

[Mode for Invention]

Various aspects of the claimed subject matter are now described with reference to the drawings, wherein like reference numerals are used to refer to like elements throughout. In the following description, for purposes of explanation, numerous specific details are set forth in order to provide a thorough understanding of one or more aspects. It may be apparent, however, that such aspect(s) may be practiced without these specific details.

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

In the following description, terms referring to signals (e.g., message and signal), terms for operations (e.g., step, method, process, and procedure), terms referring to data (e.g., information, parameter, variable, value, and bit), terms referring to device elements, and the like are illustratively used for the sake of descriptive convenience. Therefore, the disclosure is not limited by the terms as described below, and other terms referring to subjects having equivalent technical meanings may be used.

Various embodiments of the disclosure are described herein in connection with a wireless terminal and/or a base station. The wireless terminal may refer to a device providing voice and/or data connectivity to a user. The wireless terminal may be connected to a computing device such as a laptop computer or desktop computer, or it can be a self - contained device such as a personal digital assistant (PDA). The wireless terminal may also be called a system, a subscriber unit, a subscriber station, mobile station, mobile, remote station, access point, remote terminal, access terminal, user terminal, user agent, user device, or user equipment. A wireless terminal may be a subscriber station, a wireless device, a cellular telephone, a PCS telephone, a cordless telephone, a session initiation protocol (SIP) phone, a wireless local loop (WLL) station, a personal digital assistant (PDA), a handheld device having wireless connection capability, or other processing device connected to a wireless modem. The base station (e.g., access point) may refer to a device in an access network that communicates over the air-interface, through one or more sectors, with wireless terminals. The base station may act as a router between the wireless terminal and the rest of the access network, which can include an Internet Protocol (IP) network, by converting received air-interface frames to IP packets. The base station also coordinates management of attributes for the air interface.

The terms used in the disclosure are used merely to describe particular embodiments, and may not be intended to limit the scope of other embodiments. A singular expression may include a plural expression unless they are definitely different in a context. All terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

The disclosure relates to a method and a device that enable a base station to estimate distance and angle information about a UE by using a deep learning technique, based on a signal received through a wireless communication system, and to estimate a position of the UE by using another deep learning network.

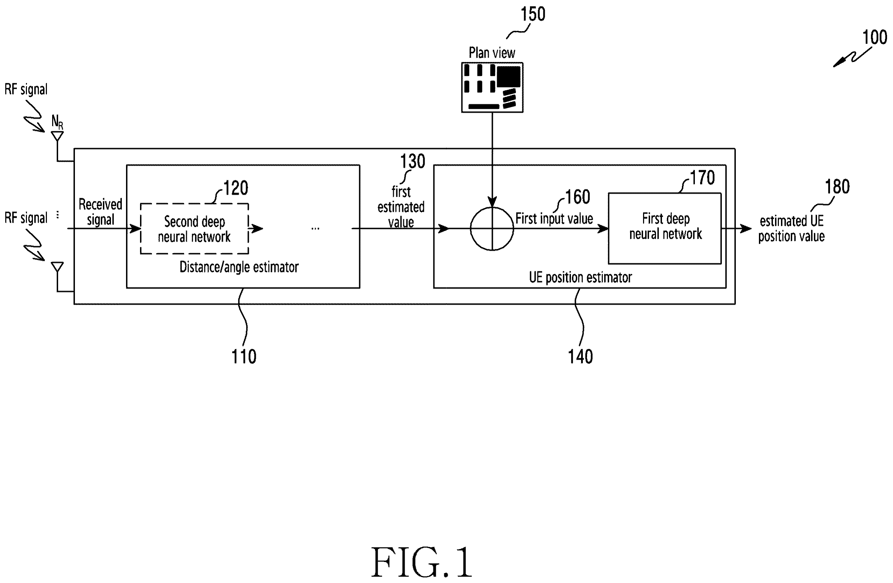

FIG. 1 is a block diagram 100 of a base station that provides distance/angle and position estimation by using a received signal according to an embodiment of the disclosure.

Referring to FIG. 1, the base station according to an embodiment may include a receiver (not shown) configured to receive a signal, a distance/angle estimator 110 configured to estimate a distance and an angle of a UE that provides a received signal by using the received signal, and a UE position estimator 140 configured to estimate a position of a UE by using values estimated by the distance/angle estimator. Here, the UE position estimator 140 may be a different base station or UE.

According to an embodiment of the disclosure, the receiver of the base station may receive a signal from the outside of the base station. For example, the receiver of the base station may receive a signal from at least one UE outside the base station through a multiple-input multiple-output (MIMO) mmWave communication system. The signal received by the base station through the MIMO mmWave communication system is a superposition of signals propagated through a plurality of paths, and may have parameters, such as a propagation time, an angle of departure (AoD), and an angle of arrival (AoA) on each path. According to an embodiment of the disclosure, the received signal may include information about the number of channel paths, a channel gain, azimuth and elevation angles of the receiver on each channel, azimuth and elevation angles of a transmitter on each channel, the number of antennas of the receiver, and the number of antennas of the transmitter.

According to an embodiment of the disclosure, the received signal received by the receiver may be delivered to the distance/angle estimator 110. Upon receiving the received signal from the receiver, the distance/angle estimator 110 may estimate information related to a distance and angle of the UE having provided the received signal, for example, a propagation path distance of the signal, an angle of departure, an angle of arrival, an azimuth angle, an elevation angle, and a strength of the received signal. The distance/angle estimator 110 may estimate the information about the distance and angle of the UE having provided the received signal without using a deep neural network. Alternatively, the distance/angle estimator 110 may estimate the information related to the distance and angle of the UE having provided the received signal by using a deep neural network.

According to an embodiment of the disclosure, when the distance/angle estimator 110 uses the deep neural network, the deep neural network used by the distance/angle estimator 110 may be a second deep neural network 120. The second deep neural network 120 may refer to a model trained for the distance/angle estimator 110 to estimate the information related to the distance and angle of the UE. For example, the distance of the UE may be a distance between the base station and the UE, and the angle of the UE may be a reception angle of the signal received by the base station from the UE. The deep neural network used by the distance/angle estimator is not limited to a particular type, and various types of deep neural networks may be used. Examples of deep neural networks available for the distance/angle estimator 110 may include a convolutional neural network (CNN), a long short-term memory (LSTM), or a transformer.

According to an embodiment of the disclosure, the distance/angle estimator 110 may use the information of the received signal received from the receiver as an input value of the second deep neural network 120. The input value input to the second deep neural network 120 may be a second input value. The second deep neural network 120 of the distance/angle estimator 110 may be trained using a loss function related to an actual distance/angle value of the UE and a predicted distance/angle value of the UE output from the second deep neural network.

Accordingly, the distance/angle estimator 110 may output the information related to the distance and angle of the UE having provided the received signal estimated by using the trained second deep neural network 120. A result value finally output from the distance/angle estimator 110 may be used as a value input to the UE position estimator 140, and may be referred to as a first estimated value 130.

According to an embodiment of the disclosure, estimated distance and angle values with respect to the UE having provided the received signal finally output by the distance/angle estimator 110 may be input as the first estimation value 130 to the UE position estimator 140. The UE position estimator 140 may transform the first estimated value 130 into a vector in an embedding dimension by allowing the first estimated value 130 to pass through a linear layer. According to an embodiment of the disclosure, the UE position estimator 140 may divide a plan-view image 150 of surroundings of the base station into a plurality of areas, thereby obtaining a patch image vector value representing a plurality of areas including information about a height of each object (e.g., a building). The UE position estimator 140 may combine the first estimated value transformed into the vector in the embedding dimension and the patch image vector value to generate a first input value 160 to be input to a first deep neural network. For example, the UE position estimator 140 may generate the first input value 160 to be input to the first deep neural network. The first deep neural network 170 may be a neural network trained to output an estimated UE position value by using the first input value 160. The first deep neural network may be, for example, a transformer block-type neural network. The first deep neural network 170 may be trained to minimize an error by using a loss function related to a mean squared error between an actual UE position value and a UE position value predicted by the first deep neural network 170.

The UE position estimator may input the first input value 160 to the first deep neural network 170 (e.g., a transformer block), and the first deep neural network 170 may perform a plurality of operations sequentially to derive an estimated UE position value 180. A position of the UE may be a 3D position of the UE, which may be, for example, expressed by a coordinate value on an x-y-z plane in which the UE is positioned.

The base station according to an embodiment of the disclosure may estimate the position value 180 of the UE by using the distance/angle estimator 110 and the UE position estimator 140. The base station according to the disclosure is capable of estimating a UE position using only a signal obtained by a single base station, and thus is easily used in a 5G system in which a signal propagation distance is short. In addition, since the position of the UE may be estimated regardless of whether a propagation path of the received signal is a line-of-sight (LoS) or a non-line-of-sight (NLoS), the base station may estimate the distance/angle and position of the UE even in a situation where there area large number of NLoS propagation paths. Further, the UE position estimator in the base station may estimate the position, based on the plan-view image of the surroundings of the base station, and may thus estimate the position of the UE without distinguishing between indoors and outdoors. According to another embodiment of the disclosure, a UE position estimator 140 of the UE may estimate the position of the UE having transmitted the received signal as another base station or UE.

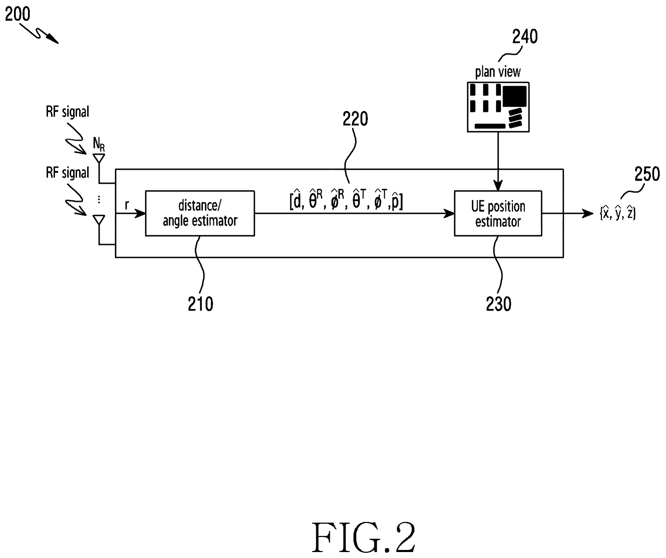

FIG. 2 is a block diagram 200 of a base station that provides distance/angle and position estimation by using a received signal according to an embodiment of the disclosure.

Referring to FIG. 2, the base station may include a receiver (not shown) configured to receive a signal, a distance/angle estimator 210 configured to estimate a distance and an angle of a UE that provides a received signal by using the received signal, and a UE position estimator 230 configured to estimate a position of a UE by using values estimated by the distance/angle estimator 210. The distance/angle estimator 210 may correspond to the distance/angle estimator 110 of FIG. 1, and the UE position estimator 230 may correspond to the UE position estimator 140 of FIG. 1.

According to an embodiment of the disclosure, the receiver of the base station may receive a signal from the outside of the base station. For example, the receiver of the base station may receive a signal from at least one UE outside the base station through a MIMO mmWave communication system. Referring to FIG. 2, the receiver in the base station may receive a received signal **r**. The received signal **r** may be a superposition of signals propagated through a plurality of paths, and may have parameters, such as a propagation time, an angle of departure

(AoD), and an angle of arrival (AoA) on each path. Specifically, the received signal **r** may include information about the number of channel paths, a channel gain, azimuth and elevation angles of the receiver for each channel, azimuth and elevation angles of a transmitter for each channel, the number of antennas of the receiver, and the number of antennas of the transmitter. The received signal **r** may be represented by Equation 1.

[Equation 1]

$$\mathbf{r} = \mathbf{W}^{H}\mathbf{HFx} + \tilde{\mathbf{n}}$$

**W** denotes a combiner matrix of the receiver, and **F** denotes a precoding matrix of the transmitter. **x** denotes a reference signal vector known to the transmitter, and n denotes a noise vector. In this case, a channel **H** may be represented by Equation 2.

[Equation 2]

$$\mathbf{H} = \sum_{i=1}^{N_{path}} \alpha_i e^{-j2\pi k f_s \tau_i} \mathbf{a}_R\big(\theta_i^R, \phi_i^R\big) \mathbf{a}_T\big(\theta_i^T, \phi_i^T\big)^{*}$$

$N_{path}$ denotes the number of channel paths, $\alpha_i$ denotes a channel gain of an ith path, ($\theta_i^R, \phi_i^R$) denotes azimuth and elevation angles of an ith path at the receiver, and ($\theta_i^T, \phi_i^T$) denotes azimuth and elevation angles of an ith path at the transmitter. Further, $\mathbf{a}_R$ and $\mathbf{a}_T$ denote steering vectors defined by Equation 3.

[Equation 3]

$$\mathbf{a}_R(\theta) = \frac{1}{\sqrt{N_R}}\Big[1, e^{j\pi \sin(\theta^R)\sin(\phi^R)}, \cdots, e^{j\pi(N_R-1)\sin(\theta^R)\sin(\phi^R)}\Big]^T$$

$$\mathbf{a}_T(\phi) = \frac{1}{\sqrt{N_T}}\Big[1, e^{j\pi \sin(\theta^T)\sin(\phi^T)}, \cdots, e^{j\pi(N_T-1)\sin(\theta^T)\sin(\phi^T)}\Big]^T$$

$N_R$ and $N_T$ respectively denote the number of antennas of the receiver and the number of antennas of the transmitter.

The distance/angle estimator 210 may estimate, by using the received signal, information related to a distance and angle of the UE having provided the received signal, for example, a travel time of the received signal on a propagation path, an angle of departure, an angle of arrival, an azimuth angle, an elevation angle, and a strength of the received signal.

The distance/angle estimator 210 may estimate the information related to the distance and angle of the UE having provided the received signal by using a deep neural network. However, since whether the distance/angle estimator 210 uses the deep neural network is an option, and the distance/angle estimator 210 may estimate the information about the distance and angle of the UE having provided the received signal without using a deep neural network. The deep neural network used by the distance/angle estimator may be a second deep neural network.

According to an embodiment of the disclosure, when the distance/angle estimator 210 uses the deep neural network, the signal **r** received from the receiver is expressed as a complex number, and thus $\mathbf{r}_{in}$ actually input to the neural network may be used by combining a real part and an imaginary part.

That is, it is possible that $\mathbf{r}_{in} = [\mathfrak{R}e(\mathbf{r}), \mathfrak{I}m(\mathbf{r})]$.

According to an embodiment of the disclosure, the distance/angle estimator 210 may perform an operation of outputting an estimated value 220 with respect to the distance and the angle of the UE having provided the received signal by using the received signal **r** obtained through the receiver. Specifically, the distance/angle estimator 210 may estimate, for example, a propagation path distance of the signal, the angle of departure, the angle of arrival, the azimuth angle, the elevation angle, and the strength of the received signal by using the received signal **r** as an input value of the distance/angle estimator. The estimated value 220 with respect to the distance and angle of the UE estimated by the distance/angle estimator may be $[\hat{d}_1, \hat{\theta}_1^R, \hat{\phi}_1^R, \hat{\theta}_1^T, \hat{\phi}_1^T, \hat{p}_1, \cdots, \hat{d}_{N_p}, \hat{\theta}_{N_p}^R, \hat{\phi}_{N_p}^R, \hat{\theta}_{N_p}^T, \hat{\phi}_{N_p}^T, \hat{p}_{N_p}]$. In addition, the estimated value 220 with respect to the distance and angle of the UE estimated by the distance/angle estimator may be an input value of the position estimator 230.

According to an embodiment of the disclosure, when the distance/angle estimator 210 estimates the information related to the distance and angle of the UE having provided the received signal by using the deep neural network, the deep neural network is not limited to a particular type, and various types of deep neural networks may be used. Examples of deep neural networks available for the distance/angle estimator 210 may include a convolutional neural network (CNN), a long short-term memory (LSTM), or a transformer.

According to an embodiment of the disclosure, an output result estimated by the distance/angle estimator 210 may be an input value of the UE position estimator 230. The UE position estimator 230 may estimate a position of the UE by using an estimated distance/angle value and a plan view 240 of surroundings of the base station. Specifically, the UE position estimator 230 may use, as an input value of a deep neural network, a value obtained by adding a position embedding matrix to a result based on a combination of the output result from the distance/angle estimator and an image patch vector value generated from the plan view 240 of a surrounding area of the base station.

The UE position estimator 230 may derive $\{\hat{x}, \hat{y}, \hat{z}\}$ as an estimated position value 250 of the UE as a final output value by using the deep neural network (e.g., the first deep neural network of FIG. 1). For example, the position estimator 230 may derive the estimated position value 250 of the UE by using a transformer block-type neural network. According to an embodiment of the disclosure, the UE position estimator 230 may estimate the position of the UE having transmitted the received signal as another base station or UE. For example, the other base station or UE may estimate the position of the UE by using the estimated value 220 with respect to the distance and angle of the UE estimated by the distance/angle estimator 210.

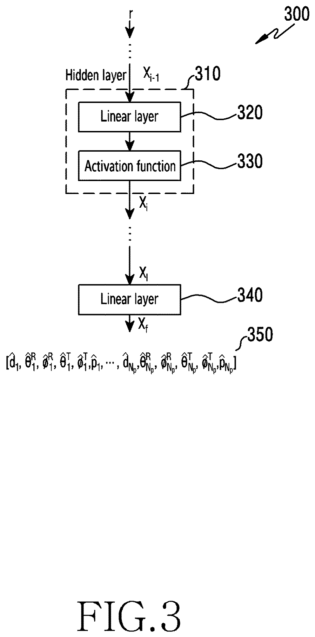

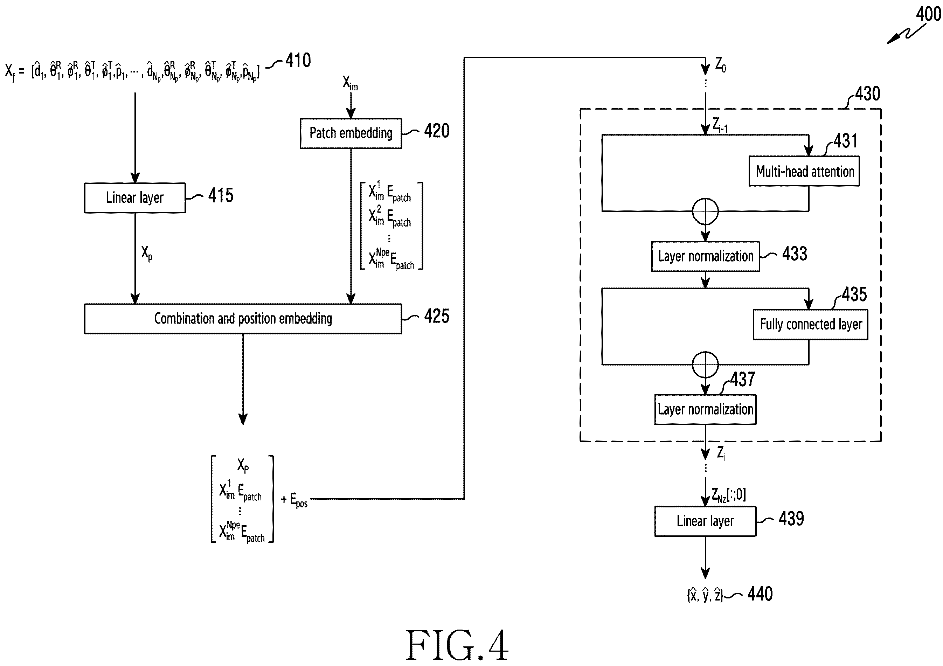

Hereinafter, detailed operations of the distance/angle estimator and the UE position estimator will be described with reference to FIG. 3 and FIG. 4.

FIG. 3 is a diagram illustrating an example 300 of a deep neural network in a distance/angle estimator according to an embodiment of the disclosure.

According to an embodiment of the disclosure, the distance/angle estimator (e.g., 110 or 210) may estimate, for example, a propagation path distance of a signal, an angle of departure, an angle of arrival, an azimuth angle, an elevation angle, and a strength of the received signal by using the received signal r as an input value of the distance/angle estimator without using a deep neural network. However, FIG. 3 illustrates a case in which the distance/angle estimator (e.g., 210) estimates information about a distance and angle of a UE having provided the received signal by using a deep neural network.

According to an embodiment of the disclosure, the deep neural network used by the distance/angle estimator may be a second deep neural network. The second deep neural network may refer to a model trained for the distance/angle estimator to estimate the information about the distance and angle of the UE having provided the received signal. For example, the distance of the UE may be a distance between a base station and the UE, and the angle of the UE may be a reception angle of the signal received by the base station from the UE. The deep neural network is not limited to a particular type, and various types of deep neural networks may be used. Examples of deep neural networks available for the distance/angle estimator may include a convolutional neural network (CNN), a long short-term memory (LSTM), or a transformer.

Referring to FIG. 3, the base station may input the received signal **r** received through a receiver to the second deep neural network of the distance/angle estimator. The received signal $\mathbf{r}_{in}$ input to the neural network is expressed as a complex number, and thus $\mathbf{r}_{in}$ actually input to the neural network may be used by combining a real part and an imaginary part. That is, it is possible that $\mathbf{r}_{in} = [\Re e(\mathbf{r}), \tilde{\Im}m(\mathbf{r})]$.

According to an embodiment of the disclosure, a value input to the distance/angle estimator may be a second input value.

According to an embodiment of the disclosure, when the deep neural network of the distance/angle estimator is only a fully connected layer, the deep neural network of the distance/angle estimator may include repetitions of fully connected layers that sequentially pass through a linear layer 320 and an activation function 330, and a last linear layer for obtaining a signal path length, an angle of departure, an angle of arrival, an azimuth angle, an elevation angle, and a received signal strength.

An output $\mathbf{x}_l$ from an *l*-th hidden layer among hidden layers 310 included in the deep neural network of the distance/angle estimator may be represented by Equation 4.

[Equation 4]

$$\mathbf{x}_l = f_{act}(\mathbf{W}_l \mathbf{x}_{l-1} + \mathbf{b}_l)$$

Here, $\mathbf{W}_l$ and $\mathbf{b}_l$ respectively denote a weight and a deviation of the hidden layer, and $f_{act}$ denotes an activation function used for each hidden layer. $\mathbf{x}_f$, which is a final output value 350 that has passed through the last linear layer 340 may be represented by Equation 5.

[Equation 5]

$$\mathbf{x}_f = \left(\hat{d}_1, \hat{\theta}_1^R, \hat{\phi}_1^R, \hat{\theta}_1^T, \hat{\phi}_1^T, \hat{p}_1, \cdots, \hat{d}_{N_p}, \hat{\theta}_{N_p}^R, \hat{\phi}_{N_p}^R, \hat{\theta}_{N_p}^T, \hat{\phi}_{N_p}^T, \hat{p}_{N_p}\right) = \mathbf{W}_f \mathbf{x}_L + \mathbf{b}_f$$

Distance/angle parameters estimated from $\mathbf{x}_f$ may be arranged as pairs by grouping components corresponding to each path, or also be arranged as a single pair of corresponding components. A case of arranging the parameters as a pair of the corresponding components may be represented by Equation 6.

[Equation 6]

$$\mathbf{x}_f = \left(\hat{d}_1, \cdots, \hat{d}_{N_p}, \hat{\theta}_1^R, \cdots, \hat{\theta}_{N_p}^R, \hat{\phi}_1^R, \cdots, \hat{\phi}_{N_p}^R, \hat{\theta}_1^T \cdots, \hat{\theta}_{N_p}^T, \hat{\phi}_1^T, \cdots, \hat{\phi}_{N_p}^T, \hat{p}_1, \cdots, \hat{p}_{N_p}\right) = \mathbf{W}_f \mathbf{x}_L + \mathbf{b}_f$$

According to an embodiment of the disclosure, the deep neural network of the distance/angle estimator may be trained in a direction of reducing a difference between estimated distance/angle and reception strength values ($\hat{d}_i$, $\hat{\theta}_i^R, \hat{\phi}_i^R, \hat{\theta}_i^T, \hat{\phi}_i^T$ , $\hat{p}_i$) estimated with respect to each path among $N_p$ paths from the input r and components ($d_i$, $\theta_i^R, \phi_i^R, \theta_i^T, \phi_i^T$ ,$p_i$) of an actual signal propagation path. To this end, a loss function is a mean square error of a difference between an estimated value and a propagation path angle, and the loss function $J_1$ may be defined by Equation 7.

[Equation 7]

$$J_1 = \frac{1}{N_p} \sum_{i=1}^{N_p} \left\{ \left(\hat{d}_i, \hat{\theta}_i^R, \hat{\phi}_i^R, \hat{\theta}_i^T, \hat{\phi}_i^T, \hat{p}_i\right) - \left(d_i, \theta_i^R, \phi_i^R, \theta_i^T, \phi_i^T, p_i\right) \right\}^2$$

According to an embodiment of the disclosure, to train the deep neural network of the distance/angle estimator, weights and deviations of the deep neural network may be optimized in a direction of minimizing the loss function. As an algorithm for optimizing the weights and deviations of the deep neural network, various backpropagation algorithms (e.g., adaptive moment estimation (ADAM) optimization, adaptive gradient (AdaGrad) optimization, or RMSprop optimization) may be used.

As a result, the distance/angle estimator may obtain the final output value $\mathbf{x}_f$ 350 as described above. The final output value $\mathbf{x}_f$ of the distance/angle estimator may be a first estimated value (e.g., 130 in FIG. 1).

According to an embodiment of the disclosure, the first estimated value (e.g., 130 in FIG. 1) output from the distance/angle estimator may be input to a UE position estimator (e.g., 140 or 230). The UE position estimator may obtain an estimated UE position value by using the first estimated value.

FIG. 4 is a diagram illustrating an example 400 of a deep neural network in a UE position estimator according to an embodiment of the disclosure.

Referring to FIG. 4, the UE position estimator (e.g., 140 or 230) may use, as an input value of the deep neural network, a combination of estimated distance and angle values of a UE that has provided a received signal output from a distance/angle estimator and an image patch vector value generated from plan-view data of a surrounding area of a base station. For example, the deep neural network used by the UE position estimator may be a transformer block-type neural network. The deep neural network of the UE position estimator may be configured as a regression model rather than a classification model, unlike a conventional transformer block. The transformer-based deep neural network configured as the regression model is different in that an output of a network is not a probability of each class but a precise position of a UE, and an output value of the distance/angle estimator are passed through a linear layer at a position where a class token is inserted, thereby inputting distance and angle information about the UE that has provided the received signal. However, the deep neural network applied to the UE position estimator is not limited to the transformer block-type neural network, and may be various neural networks other than the transformer block type.

According to an embodiment of the disclosure, the UE position estimator may allow the estimated distance and angle values $\mathbf{x}_f = \left[ \hat{d}_1, \hat{\theta}_1^R, \hat{\phi}_1^R, \hat{\theta}_1^T, \hat{\phi}_1^T, \hat{p}_1, \cdots, \hat{d}_{N_p}, \hat{\theta}_{N_p}^R, \hat{\phi}_{N_p}^R, \hat{\theta}_{N_p}^T, \hat{\phi}_{N_p}^T, \hat{p}_{N_p} \right]$ 410 of the UE that has provided the received signal, which is estimated by the distance/angle estimator, to pass through a single linear layer 415. The estimated distance and angle values of the UE that has provided the received signal may be extended not only as one-time information but also in a form that utilizes sequential signal information transmitted as the UE moves. The UE position estimator may embed, through the linear layer, each of the estimated distance and angle values of the UE having provided the received signal relating to a sequential signal, thus using the same as an input together with a plan-view image.

$\mathbf{x}_f$ 410 that has passed through the linear layer 415 may be transformed into a vector value in an embedding dimension, and the transformed vector value of $\mathbf{x}_f$ 410 in the embedding dimension may be $\mathbf{x}_p$. $\mathbf{x}_p$ may be represented by Equation 8.

$$[\text{Equation 8}]$$

$$\mathbf{x}_p = \mathbf{W}_p \mathbf{x}_e + \mathbf{b}_p$$

The UE position estimator may use plan-view image data of the surrounding area of the base station as an input value of the deep neural network. For example, a plan-view image of the surrounding area of the base station may be subjected to patch embedding 420 through a convolutional neural network (CNN) and used as an input to the deep neural network. A plan view of the surrounding area of the base station used by the UE position estimator may be a plan view in an RGB format, such as a picture, or a plan view in which a height of an object (e.g., a building or an obstacle) is represented in an image form. The plan view in which the height of the object is represented in the image form may be a grayscale image. The UE position estimator may perform the patch embedding 420 in which the plan view of the surrounding area of the base station is divided into a plurality of areas, and an image corresponding to each area is embedded in a vector via a CNN to generate a patch image vector. In this case, a plurality of patches may include information about heights of the buildings. The plan-view image $\mathbf{x}_{im}$ of the surrounding area of the base station may be divided into $N_{pe}$ patches, and each patch may be multiplied by $\mathbf{E}_{patch}$ to be transformed into an embedding vector.

Subsequently, the UE position estimator may combine embedded distance and angle vectors with an embedded patch image vector as an operation of performing combination and position embedding 425. When combining the embedded distance and angle vectors with the embedded patch image vector, the UE position estimator may transform each embedded vector into a column vector, and may arrange a plurality of transformed column vectors in a form of a matrix. The combined matrix may be added to a position embedding matrix $\mathbf{E}_{pos}$ in the same dimension, thereby deriving as a result of $\mathbf{z}_0$. $\mathbf{z}_0$ may be defined by Equation 9.

$$[\text{Equation 9}]$$

$$\mathbf{z}_0 = \left[ \mathbf{x}_p;\ \mathbf{x}_{im}^1 \mathbf{E}_{patch};\ \cdots;\ \mathbf{x}_{im}^{N_{pe}} \mathbf{E}_{patch} \right] + \mathbf{E}_{pos}$$

According to an embodiment of the disclosure, the UE position estimator may use $\mathbf{z}_0$ as an input value of the deep neural network. For example, the UE position estimator may use $\mathbf{z}_0$ as an input value for the transformer block 430.

The UE position estimator of the base station may include one or a plurality of transformer blocks. As the number of transformer blocks increases, an amount of data that may be trained in the transformer blocks increases, and thus a more accurate estimated UE position value may be obtained.

According to an embodiment of the disclosure, one transformer block 430 may sequentially perform a plurality of operations. An operation performed first by the transformer block 430 may be a multi-head attention operation 431. In the multi-head attention operation, when Z is an input to multi-head attention, a kth head among a total of N heads may calculate a query $Q_k$, a key $K_k$, and a value $V_k$ by multiplying the input matrix Z by a query weight matrix $W_k$, a key weight matrix $W_k$, and a value weight matrix $W_k$, respectively. Subsequently, an attention score may be calculated by using the query, the key, and the value. An attention score $AS_k$ of the kth head may be calculated by Equation 10.

[Equation 10]

$$AS_k = softmax\left(\frac{1}{\sqrt{d}}Q_kK_k^T\right)V_k$$

Here, $d$ may denote a dimension of the embedded distance/angle vector or the embedded patch image vector. Attention scores calculated in each head may be concatenated and calculated as a final result of N multi-head attentions.

The result of the multi-head attention operation may be added to the input before the multi-head attention, after which a residual connection may be performed. Layer normalization 433 may be performed after the residual connection. Following the layer normalization, the output may pass through one fully connected layer 435 and be added to the input before the fully connected layer, after which a residual connection may be performed, and then layer normalization 437 may be performed again. In summary, the single transformer block 43 0 may perform a series of processes from the multi-head attention operation to the layer normalization after a linear layer (multi-head attention, residual connection, layer normalization, linear layer, residual connection, and layer normalization). When $\mathbf{z}_0$ passes through a total of $N_z$ transformer blocks, the position estimator may output an estimated UE position value $\{\hat{x}, \hat{y}, \hat{z}\}$ 440, which is a predicted value of a 3D position x, y, z of the UE, by passing a vector corresponding to $x_p$ from an output $\mathbf{z}_{N_s}$, which is a final output value having passed through a last transformer block, through a linear layer 439.

According to an embodiment of the disclosure, the deep neural network may be trained by using a mean squared error between the actual position (x, y, z) of the UE and the position ($\hat{x}, \hat{y}, \hat{z}$) of the UE predicted by the deep neural network of the UE position estimator as a loss function. A parameter of a network may be optimized using a backpropagation algorithm through a value of the loss function. The loss function $J_2$ of the deep neural network of the UE position estimator may be defined by Equation 11.

[Equation 11]

$$J_2 = (\hat{x} - x)^2 + (\hat{y} - y)^2 + (\hat{z} - z)^2$$

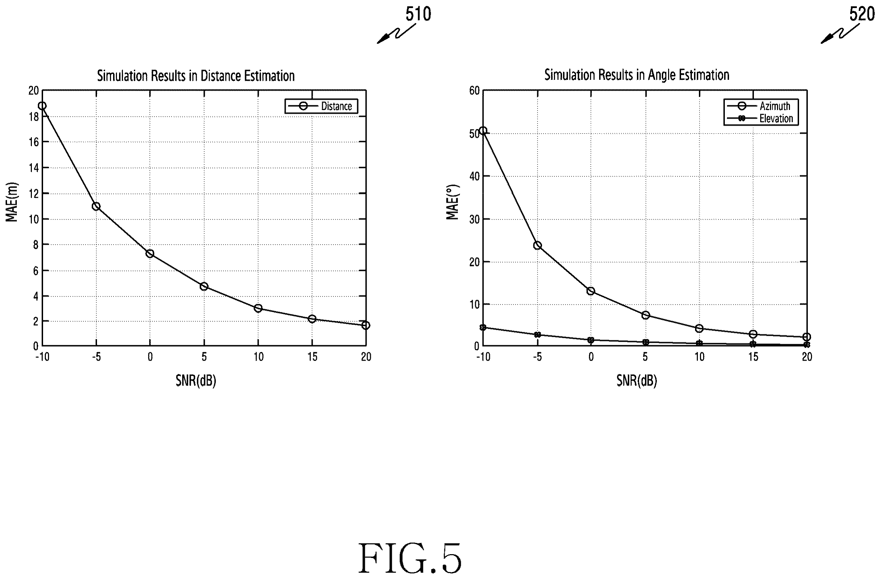

FIG. 5 is a graph illustrating a mean absolute error of an estimated distance/angle according to a signal-to-noise ratio according to an embodiment of the disclosure.

Specifically, FIG. 5 illustrates a simulation result 510 of a mean absolute error (MAE) of a distance and a signal-to-noise ratio (SNR), and a simulation result 520 of mean absolute errors of azimuth and elevation angles and a signal-to-noise ratio.

According to an embodiment of the disclosure, a simulation of FIG. 5 assumes that a base station is located in a center of an urban environment with a size of 140 m * 140 m, and a UE having provided a received signal, which is a subject of distance and angle estimation, is randomly positioned outside a building. However, the disclosure is not limited thereto.

Referring to FIG. 5, the simulation result 510 of the mean absolute error of the distance and the signal-to-noise ratio shows that the mean absolute error between the predicted distance estimate and an actual distance value decreases as the signal-to-noise ratio increases. A higher signal-to-noise ratio indicates a signal with less noise and better performance, and the simulation result of FIG. 5 shows that a signal with better performance has a lower mean absolute error between the actual distance and the predicted distance according to the disclosure.

The simulation result 520 of the mean absolute error of the azimuth and elevation angles and the signal-to-noise ratio may also show that the mean absolute error between the predicted angle estimate of an estimated angle value and an actual angle value decreases as the signal-to-noise ratio increases. A signal with better performance also shows a low mean absolute error between the actual angle and the predicted angle of the disclosure.

According to an embodiment of the disclosure, the simulation result showing the mean absolute error of the estimated angle value according to the signal-to-noise ratio in FIG. 5 illustrates a case where a deep neural network is used for angle estimation, in which eight fully connected layers are used and a dimension of each layer is 1000. As activation function used in the fully connected layers is a rectified linear unit (ReLU) function defined by Equation 12.

[Equation 12]

$$f_{\mathrm{ReLU}}(x) = \max(0, x)$$

However, as described above with reference to FIG. 3, when a distance/angle estimator performs distance and angle estimation for the UE that has provided the received signal, a deep neural network may not be used, and even when a deep neural network is employed, the disclosure is not limited to a simulation scenario illustrated in FIG. 5.

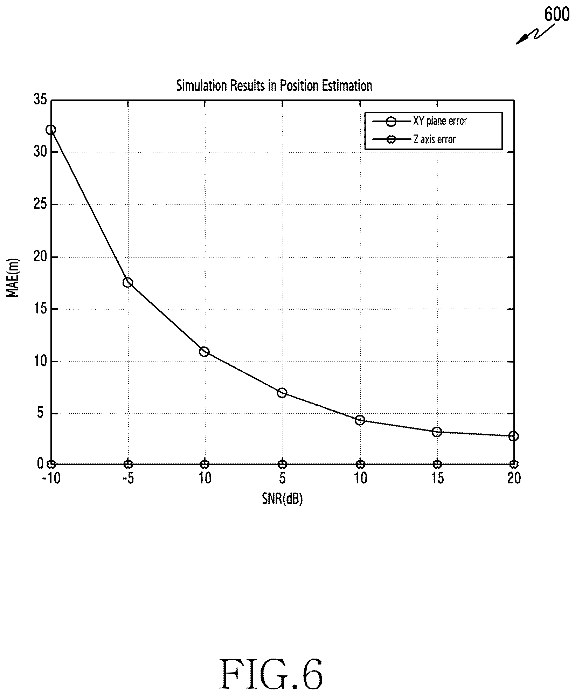

FIG. 6 is a graph illustrating a mean absolute error of an estimated position according to a signal-to-noise ratio according to an embodiment of the disclosure.

Specifically, FIG. 6 illustrates a simulation result 600 of a mean absolute error (MAE) of a position on an X-Y plane and a mean absolute error thereof on a Z axis, and a signal-to-noise ratio (SNR).

According to an embodiment of the disclosure, a simulation of FIG. 6 assumes that a base station is located in a center of an urban environment with a size of 140 m * 140 m, and a UE, which is a subject of position estimation, is randomly positioned outside a building. However, the disclosure is not limited thereto.

The simulation result illustrated in FIG. 6 is based on a case where patch embedding is performed by configuring an embedding size to 72 for a plan view of a surrounding area of the base station, and where six transformer blocks are used as a deep neural network. An activation function used in a fully connected layer inside the transformer blocks is a Gaussian error rectified linear unit (GELU), defined by Equation 13.

[Equation 13]

$$f_{GELU}(x) = 0.5x(1 + \tanh\left(\sqrt{\frac{2}{\pi}}(x + 0.044715x^3)\right)$$

However, an operation of a UE position estimator estimating a UE position is not limited to a simulation scenario illustrated in FIG. 6.

Referring to FIG. 6, the result shows that a mean absolute error between a predicted position estimate and an actual position value on the X-Y plane decreases as the signal-to-noise ratio increases. A higher signal-to-noise ratio value indicates a signal with less noise and better performance, and the simulation result of FIG. 6 shows that a signal with a good performance has a lower mean absolute error between an actual position and a predicted position according to the disclosure.

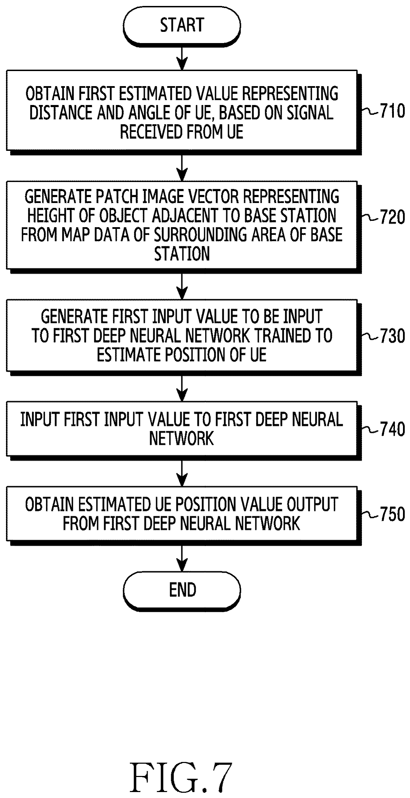

FIG. 7 is a flowchart illustrating a method in which a base station estimates a UE position according to an embodiment of the disclosure.

Referring to FIG. 7, in operation 710, the base station may obtain a first estimated value representing a distance and an angle of a UE, based on a received signal. The first estimated value may be a result value obtained by a distance/angle estimator included in the base station estimating the distance and the angle of the UE that have provided the received signal, based on the received signal.

According to an embodiment of the disclosure, the first estimated value may be a result value obtained by the distance/angle estimator estimating, for example, a propagation path distance of the signal, an angle of departure, an angle of arrival, an azimuth angle, an elevation angle, and a strength of the received signal, by using the received signal as an input value. According to an embodiment of the disclosure, the distance/angle estimator may estimate, for example, the propagation path distance of the signal, the angle of departure, the angle of arrival, the azimuth angle, the elevation angle, and the strength of the received signal, by using the received signal r as the input value of the distance/angle estimator. The result value estimated by the distance/angle estimator may be the first estimated value. According to an embodiment of the disclosure, the first estimated value may be used as one of input values of a UE position estimator included in the base station when the UE position estimator predicts an estimated UE position value.

In operation 720, the base station may generate a patch image vector including height information about an object (e.g., a building or an obstacle) adjacent to the base station from map data of a surrounding area of the base station. Specifically, the UE position estimator included in the base station may divide a plan-view image of the surrounding area of the base station into a plurality of areas, and embed an image corresponding to each area into a vector, thereby generating a patch image vector. A plan view of the surrounding area of the base station may be a plan view in an RGB format, such as a picture, or a plan view in which an object (e.g., a height of a building or an obstacle) is represented in an image form.

In operation 730, the base station may generate a first input value to be input to a first deep neural network trained to estimate a position of the UE. The first input value may be generated based on a vector value into which the first estimated value obtained in operation 710 is embedded and the patch image vector obtained in operation 720. For example, the position estimator may combine a vector value obtained by transforming the first estimated value into an embedding dimension and a patch image vector value, and then transform the combined values into a column vector. The position estimator may generate a plurality of transformed column vectors in a form of a matrix, and add a position embedding matrix $\mathbf{E}_{pos}$ having the same dimension as the matrix to the matrix, thereby generating the first input value.

In operation 740, the base station may input the generated first input value to the first deep neural network. The position estimator included in the base station may input the first input value generated by using the first estimated value and the patch image vector in operation 730 to the first deep neural network for estimating the position of the UE. The first deep neural network may refer to a neural network trained to estimate a UE position. According to an embodiment of the disclosure, the first deep neural network may be trained using a mean squared error between the actual position (x, y, z) of the UE and the position ($\hat{x}$, $\hat{y}$, $\hat{z}$) of the UE predicted by the first deep neural network as a loss function. The first deep neural network may optimize a network parameter by using a backpropagation algorithm through a value of the loss function.

According to an embodiment of the disclosure, the first deep neural network may be a transformer block-type neural network. One transformer block-type neural network may perform a plurality of operations sequentially. An operation that is first performed by the transformer block may be a multi-head attention operation. A result of the multi-head attention operation may be added to the input before the multi-head attention, after which a residual connection may be performed. Layer normalization may be performed after the residual connection. Following the layer normalization, the output may pass through one fully connected layer and be added to the input before the fully connected layer, after which a residual connection may be performed, and then layer normalization may be performed again. In summary, the single transformer block may perform a series of processes from the multi-head attention operation to the layer normalization after a linear layer (multi-head attention, residual connection, layer normalization, linear layer, residual connection, and layer normalization).

In operation 750, the base station may obtain an estimated UE position value output from the first deep neural network. The position estimator may output the estimated UE position value {$\hat{x}$, $\hat{y}$, $\hat{z}$}, which is a predicted value of a 3D position x, y, z of the UE, by passing an output value obtained by inputting the first input value to the first deep neural network through a last transformer block and then through a linear layer.

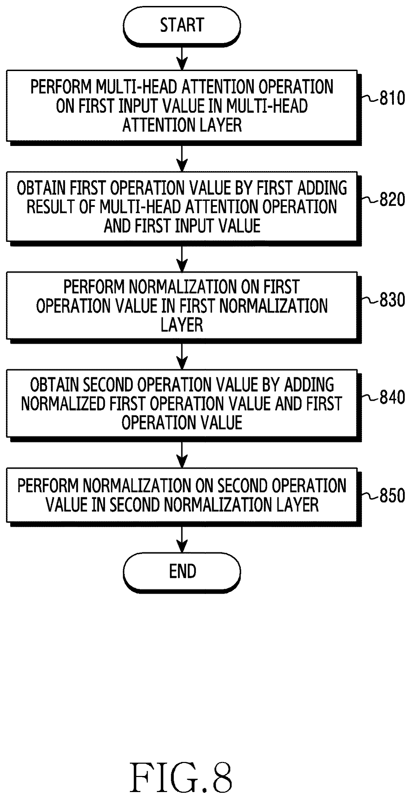

FIG. 8 is a flowchart illustrating a method in which a deep neural network in a position estimator estimates a UE position according to an embodiment of the disclosure. FIG. 8 illustrates an operation in which the first deep neural network performs an operation when the base station inputs the first input value to the first deep neural network in operation 740 of FIG. 7.

The position estimator may input the first input value as an input value of the first deep neural network. The first deep neural network may be a transformer block-type neural network. The first input value may be a value input to the transformer block, and may be obtained by a position estimator combining a value obtained by transforming estimated distance and angle values with respect to a UE estimated by a distance/angle estimator into a vector in an embedding dimension, and a value obtained by dividing a plan-view image of a surrounding area of the base station into a plurality of areas and transforming the same into a vector in an embedding dimension.

Referring to FIG. 8, in operation 810, the base station may perform a multi-head attention operation on the first input value in a multi-head attention layer of the transformer block. In the multi-head attention operation, when Z is an input to multi-head attention, a kth head among a total of N heads may calculate a query $Q_k$, a key $K_k$, and a value $V_k$ by multiplying the input matrix Z by a query weight matrix $W_k$, a key weight matrix $W_k$, and a value weight matrix $W_k$, respectively. Subsequently, an attention score may be calculated by using the query, the key, and the value. An attention score $AS_k$ of the k th head may be calculated by $AS_k = softmax\left(\frac{1}{\sqrt{d}} Q_k K_k^T\right) V_k$ .

Here, $d$ may denote a dimension of the embedded distance/angle vector or the embedded patch image vector. Attention scores calculated in each head may be concatenated and calculated as a final result of N multi-head attentions.

In operation 820, the base station may obtain a first operation value by first adding a result of the multi-head attention operation and the first input value. Specifically, the first operation value may be obtained through a residual connection operation of combining the first input value, which is an input value before the multi-head attention, with the result of the multi-head attention operation.

In operation 830, the base station may perform normalization on the first operation value in a first normalization layer. A result of the first normalization may be input to a single fully connected layer.

In operation 840, the base station may obtain a second operation value by adding the first operation value normalized in operation 830 and the first operation value in operation 820. Specifically, the result of performing normalization on the first operation value in the first normalization layer may be input to the fully connected layer, and a residual connection of adding the result and the first operation value, which is an input value before the fully connected layer may be performed.

In operation 850, normalization of the second operation value obtained in operation 840 may be performed in a second normalization layer. A result value obtained by performing normalization on the second operation value in the second normalization layer may be a result after passing through a single transformer block.

According to an embodiment of the disclosure, there may be a plurality of transformer blocks, and a result after passing through the plurality of transformer blocks may finally pass through a linear layer and be output as x, y, and z, which are predicted values of a 3D position of the UE.

The first deep neural network of the position estimator included in the base station may be trained to minimize an error by using a loss function related to a mean squared error between an actual UE position (x, y, z) and an estimated UE position ($\hat{x}$, $\hat{y}$, $\hat{z}$) predicted in a training state while passing through the transformer block, thereby outputting a predicted UE position value.

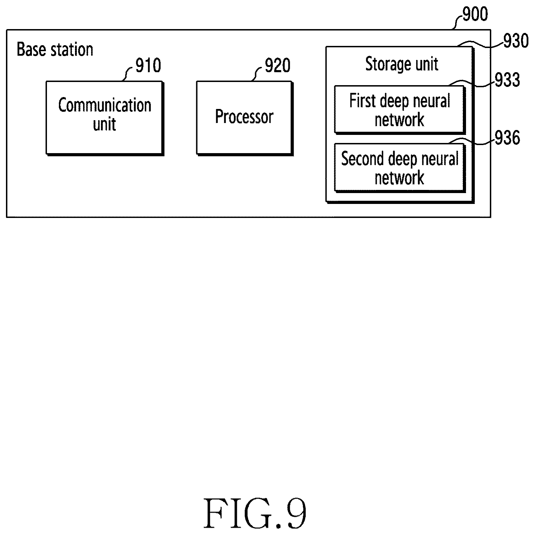

FIG. 9 illustrates a structure of a base station according to an embodiment of the disclosure.

Referring to FIG. 9, the base station 900 includes a communication unit 910, a processor 920, and a storage 930. The base station 900 may perform the base station operations in FIGS. 1 to 8.

The communication unit 910 performs functions for transmitting/receiving signals through a radio channel. For example, the communication unit 910 performs functions of conversion between baseband signals and bitstrings according to the physical layer specifications of the system. For example, during data transmission, the communication unit 910 encodes and modulates a transmitted bitstring to generate complex symbols. In addition, during data reception, the communication unit 910 demodulates and decodes a baseband signal to restore a received bitstring. In addition, the wireless communication unit 910 up-converts a baseband signal to a radio frequency (RF) band signal, transmits the up-converted RF band signal via an antenna, and then down-converts the RF band signal received via the antenna to a baseband signal.

To this end, the wireless communication unit 910 may include a transmission filter, a reception filter, an amplifier, a mixer, an oscillator, a digital to analog converter (DAC), an analog to digital converter (ADC), and the like. In addition, the communication unit 910 may include multiple transmission/reception paths. Furthermore, the wireless communication unit 910 may include at least one antenna array including multiple antenna elements. In terms of hardware, the wireless communication unit 910 may include a digital unit and an analog unit, and the analog unit may include multiple sub-units according to operation power, frequencies, etc.

The communication unit 910 may transmit/receive signals. To this end, the communication unit 910 may include at least one transceiver. For example, the communication unit 910 may transmit a synchronization signal, a reference signal, system information, a message, control information, data, or the like. Furthermore, the communication unit 910 may perform beamforming.

The communication unit 910 transmits and receives signals as described above. Accordingly, all or part of the communication unit 910 may be referred to as a "transmitter", a "receiver", or a "transceiver". In addition, as used in the following description, the meaning of "transmission and reception performed through a radio channel" includes the meaning that the above-described processing is performed by the communication unit 910.

The processor 920 controls overall operation of the base station 900. For example, the processor 920 transmits and receives signals through the communication unit 910. In addition, the processor 920 records data in the storage 930 and reads the data from the storage 930. The processor 920 may control at least one other component (e.g., a first deep neural network 933 and a second deep neural network 936 in the storage unit 930) of the base station 900 connected to the processor 920, and may perform various data processing or operations. The processor 920 may control the operations of the base station in FIG. 1 to FIG. 8.

According to an embodiment of the disclosure, the processor 920 may obtain estimated distance and angle values with respect to the UE that has provided a received signal by using the second deep neural network 936 stored in the storage unit 930 for a distance/angle estimator (e.g., 110 in FIG. 1 or 210 in FIG. 2). Alternatively, according to another embodiment, the processor 920 may obtain estimated distance and angle values with respect to the UE that has provided the received signal, without using the second deep neural network 936 stored in the storage unit 930 for the distance/angle estimator.

Further, according to an embodiment of the disclosure, when calculating an estimated position value of the UE, the processor 920 may obtain an estimated position value of the UE by using the first deep neural network 933 stored in the storage unit 930 for a UE position estimator (e.g., 140 in FIG. 1 or 230 in FIG. 2).

The storage 930 may store basic programs, application programs, and data, such as configuration information, for the operation of the base station. The storage 930 may include a memory. The storage 930 may include a volatile memory, a nonvolatile memory, or a combination of a volatile memory and a nonvolatile memory. The memory included in the storage 930 may store various data used by at least one component of the base station. The data may include, for example, input data or output data (e.g., a first estimated value, a first input value, a second input value, or terminal location value). Also, the storage 930 may provide the stored data at the request of the processor 920.

The storage unit 930 may store information about the first deep neural network 933 and the second deep neural network 936. The storage unit 930 may provide data of the second deep neural network 936 used when the distance/angle estimator estimates distance and angle values upon request from the processor 920. In addition, the storage unit 930 may provide data of the first deep neural network 933 used when the position estimator estimates a position value of the UE upon request from the processor 920.

The structure of the base station 900 illustrated in FIG. 9 is a merely an example of the base station, and examples of the base station for performing various embodiment of the disclosure are not limited to the structure illustrated in FIG. 9. That is, some components may be added, omitted, or changed according to various embodiments. For example, the processor 920 may include a separate dedicated processor for computation of a deep neural network, and the storage 930 may include a dedicated storage for computation of a deep neural network.

In FIG. 9, the base station 900 has been described as a single entity, but the disclosure is not limited thereto. In addition to the integrated deployment, the base station 900 according to various embodiments of the disclosure may be implemented to construct an access network having a distributed deployment.

The embodiments of the disclosure described and shown in the specification and the drawings are merely particular examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary.

As described above, a method in which a base station (station) estimates a position of a user equipment (UE) according to an embodiment of the disclosure may include obtaining a first estimated value indicating a distance and an angle of a UE, based on a signal received from the UE, generating a patch image vector including height information about an object adjacent to the base station from map data of a surrounding area of the base station, generating a first input value to be input to a first deep neural network trained to estimate a position of the UE, based on a vector generated from the first estimated value and the patch image vector, inputting the first input value to the first deep neural network, and obtaining an estimated position value of the UE output from the first deep neural network.

According to an embodiment of the disclosure, the first deep neural network may be configured as a regression model.

According to an embodiment of the disclosure, the first deep neural network may include a multi-head attention layer, a first normalization layer, a fully connected layer, and a second normalization layer.

According to an embodiment of the disclosure, the method in which the base station estimates the position of the UE may further include performing a multi-head attention operation on the first input value in the multi-head attention layer, obtaining a first operation value by adding a result of performing the multi-head attention operation and the first input value, performing normalization on the first operation value in the first normalization layer, obtaining a second operation value by adding the normalized first operation value and the first operation value, and performing normalization on the second operation value in the second normalization layer.

According to an embodiment of the disclosure, the generating of the first input value may further include generating a matrix value, based on the vector generated from the first estimated value and the patch image vector, and adding a position embedding matrix value to the matrix value.

According to an embodiment of the disclosure, the patch image vector may be generated by dividing the map data including the height information about the object adjacent to the base station into a plurality of areas and embedding the plurality of areas into a vector.

According to an embodiment of the disclosure, the first deep neural network may be trained using a loss function related to an actual position value of the UE and a predicted position value of the UE output from the first deep neural network.

According to an embodiment of the disclosure, the signal received from the UE may include information about a number of channel paths, a channel gain, an azimuth angle and elevation angle of a receiver on each channel, an azimuth angle and elevation angle of a transmitter on each channel, a number of antennas of the receiver, and a number of antennas of the transmitter.

According to an embodiment of the disclosure, the obtaining of the first estimated value may further include generating a second input value to be input to a second deep neural network trained to estimate the distance and angle of the UE, based on the signal received from the UE, and inputting the second input value to the second deep neural network, and the first estimated value may be obtained as a result of inputting the second input value to the second deep neural network.

According to an embodiment of the disclosure, the second deep neural network may be trained using a loss function related to an actual distance value and an actual angle value of the UE and a predicted distance value and a predicted angle value of the UE output from the second deep neural network.

As described above, a base station for estimating a position of a UE according to an embodiment of the disclosure may include a transceiver, a memory, and at least one processor. The at least one processor may be configured, by executing instructions stored in the memory, to obtain a first estimated value indicating a distance and an angle of a UE, based on a signal received from the UE, generate a patch image vector including height information about an object adjacent to the base station from map data of a surrounding area of the base station, generate a first input value to be input to a first deep neural network trained to estimate a position of the UE, based on a vector generated from the first estimated value and the patch image vector, input the first input value to the first deep neural network, and obtain an estimated position value of the UE output from the first deep neural network.

According to an embodiment of the disclosure, the first deep neural network may be configured as a regression model.

According to an embodiment of the disclosure, the first deep neural network may include a multi-head attention layer, a first normalization layer, a fully connected layer, and a second normalization layer.

According to an embodiment of the disclosure, the at least one processor may be configured to perform a multi-head attention operation on the first input value in the multi-head attention layer, obtain a first operation value by adding a result of performing the multi-head attention operation and the first input value, perform normalization on the first operation value in the first normalization layer, obtain a second operation value by adding the normalized first operation value and the first operation value, and perform normalization on the second operation value in the second normalization layer.

According to an embodiment of the disclosure, the at least one processor may be configured to generate a matrix value, based on the vector generated from the first estimated value and the patch image vector, and generate the first input value by adding a position embedding matrix value to the matrix value.

According to an embodiment of the disclosure, the patch image vector may be generated by dividing the map data including the height information about the object adjacent to the base station into a plurality of areas and embedding the plurality of areas into a vector.

According to an embodiment of the disclosure, the first deep neural network may be trained using a loss function related to an actual position value of the UE and a predicted position value of the UE output from the first deep neural network.

According to an embodiment of the disclosure, the signal received from the UE may include information about a number of channel paths, a channel gain, an azimuth angle and elevation angle of a receiver on each channel, an azimuth angle and elevation angle of a transmitter on each channel, a number of antennas of the receiver, and a number of antennas of the transmitter.

According to an embodiment of the disclosure, the at least one processor may be configured to generate a second input value to be input to a second deep neural network trained to estimate the distance and angle of the UE, based on the signal received from the UE, and obtain the first estimated value by inputting the second input value to the second deep neural network, and the first estimated value may be obtained as a result of inputting the second input value to the second deep neural network.

According to an embodiment of the disclosure, the second deep neural network may be trained using a loss function related to a predicted distance value and a predicted angle value of the UE and an actual distance value and an actual angle value of the UE output from the second deep neural network.

**Claims**

1. A method in which a base station estimates a position of a terminal, the method comprising:

   obtaining a first estimated value indicating a distance and an angle of a terminal, based on a signal received from the terminal;
   generating a patch image vector comprising height information about an object adjacent to the base station from map data of a surrounding area of the base station;
   generating a first input value to be input to a first deep neural network trained to estimate a position of the terminal, based on a vector generated from the first estimated value and the patch image vector;
   inputting the first input value to the first deep neural network; and
   obtaining an estimated position value of the terminal output from the first deep neural network.

2. The method of claim 1, wherein the first deep neural network is configured as a regression model, and comprises a multi-head attention layer, a first normalization layer, a fully connected layer, and a second normalization layer.

3. The method of claim 2, further comprising:

   performing a multi-head attention operation on the first input value in the multi-head attention layer;
   obtaining a first operation value by adding a result of performing the multi-head attention operation and the first input value;
   performing normalization on the first operation value in the first normalization layer;
   obtaining a second operation value by adding the normalized first operation value and the first operation value; and
   performing normalization on the second operation value in the second normalization layer.

4. The method of claim 1, wherein the generating of the first input value comprises:

generating a matrix value, based on the vector generated from the first estimated value and the patch image vector; and
adding a position embedding matrix value to the matrix value.

5. The method of claim 1, wherein the patch image vector is generated by dividing the map data into a plurality of areas and embedding the plurality of areas into a vector.

6. The method of claim 1, wherein the first deep neural network is trained using a loss function related to an actual position value of the terminal and a predicted position value of the terminal output from the first deep neural network, and
wherein the signal received from the terminal comprises information about a number of channel paths, a channel gain, an azimuth angle and elevation angle of a receiver on each channel, an azimuth angle and elevation angle of a transmitter on each channel, a number of antennas of the receiver, and a number of antennas of the transmitter.

7. The method of claim 1, wherein the obtaining of the first estimated value comprises:

generating a second input value to be input to a second deep neural network trained to estimate the distance and angle of the terminal, based on the signal received from the terminal; and
inputting the second input value to the second deep neural network,
wherein the first estimated value is obtained as a result of inputting the second input value to the second deep neural network, and
wherein the second deep neural network is trained using a loss function related to an actual distance value and an actual angle value of the terminal and a predicted distance value and a predicted angle value of the terminal output from the second deep neural network.

8. A base station for estimating a position of a terminal, the base station device comprising:

a transceiver;
a memory; and
at least one processor,
wherein the at least one processor is configured to, by executing instructions stored in the memory:

obtain a first estimated value indicating a distance and an angle of a terminal, based on a signal received from the terminal;
generate a patch image vector comprising height information about an object adjacent to the base station from map data of a surrounding area of the base station;
generate a first input value to be input to a first deep neural network trained to estimate a position of the terminal, based on a vector generated from the first estimated value and the patch image vector;
input the first input value to the first deep neural network; and
obtain an estimated position value of the terminal output from the first deep neural network.

9. The base station of claim 8, wherein the first deep neural network is configured as a regression model, and comprises a multi-head attention layer, a first normalization layer, a fully connected layer, and a second normalization layer.

10. The base station of claim 9, wherein the at least one processor is configured to:

perform a multi-head attention operation on the first input value in the multi-head attention layer;
obtain a first operation value by adding a result of performing the multi-head attention operation and the first input value;
perform normalization on the first operation value in the first normalization layer;
obtain a second operation value by adding the normalized first operation value and the first operation value; and
perform normalization on the second operation value in the second normalization layer.

11. The base station of claim 8, wherein the at least one processor is configured to:

generate a matrix value, based on the vector generated from the first estimated value and the patch image vector;

and

generate the first input value by adding a position embedding matrix value to the matrix value.

12. The base station of claim 8, wherein the patch image vector is generated by dividing the map data including the height information about the object adjacent to the base station into a plurality of areas and embedding the plurality of areas into a vector.

13. The method of claim 8, wherein the first deep neural network is trained using a loss function related to an actual position value of the terminal and a predicted position value of the terminal output from the first deep neural network, and

wherein the signal received from the terminal comprises information about a number of channel paths, a channel gain, an azimuth angle and elevation angle of a receiver on each channel, an azimuth angle and elevation angle of a transmitter on each channel, a number of antennas of the receiver, and a number of antennas of the transmitter.

14. The base station of claim 8, wherein the at least one processor is configured to:

generate a second input value to be input to a second deep neural network trained to estimate the distance and angle of the terminal, based on the signal received from the terminal; and
obtain the first estimated value by inputting the second input value to the second deep neural network, and
wherein the first estimated value is obtained as a result of inputting the second input value to the second deep neural network.

15. The base station of claim 14, wherein the second deep neural network is trained using a loss function related to a predicted distance value and a predicted angle value of the terminal and an actual distance value and an actual angle value of the terminal.

FIG.1

EP 4 730 882 A1

FIG.2

EP 4 730 882 A1

FIG.3

EP 4 730 882 A1

$$X_j = [\hat{d}_1, \hat{\theta}_1^R, \hat{\phi}_1^R, \hat{\theta}_1^T, \hat{\phi}_1^T, \hat{p}_1, \cdots, \hat{d}_{N_p}, \hat{\theta}_{N_p}^R, \hat{\phi}_{N_p}^R, \hat{\theta}_{N_p}^T, \hat{\phi}_{N_p}^T, \hat{p}_{N_p}]$$ — 410

$X_{im}$

Patch embedding — 420

Linear layer — 415

$$\begin{bmatrix} X_{im}^1 \, E_{patch} \\ X_{im}^2 \, E_{patch} \\ \vdots \\ X_{im}^{Npe} \, E_{patch} \end{bmatrix}$$

$X_p$

Combination and position embedding — 425

$$\begin{bmatrix} X_P \\ X_{im}^1 \, E_{patch} \\ \vdots \\ X_{im}^{Npe} \, E_{patch} \end{bmatrix} + E_{pos}$$

$Z_0$

430

$Z_{i-1}$

Multi-head attention — 431

Layer normalization — 433

Fully connected layer — 435

Layer normalization — 437

$Z_i$

$Z_{Nz}[:,0]$

Linear layer — 439

$\{\hat{x}, \hat{y}, \hat{z}\}$ — 440

400

FIG.4

510

Simulation Results in Distance Estimation

520

Simulation Results in Angle Estimation

FIG.5

600

FIG.6

```
                    ┌─────────────┐
                    │    START    │
                    └──────┬──────┘
                           │
                           ▼
        ┌──────────────────────────────────────┐
        │  OBTAIN FIRST ESTIMATED VALUE          │
        │  REPRESENTING DISTANCE AND ANGLE OF    │ ~710
        │  UE, BASED ON SIGNAL RECEIVED FROM UE  │
        └──────────────────┬─────────────────────┘
                           │
                           ▼
        ┌──────────────────────────────────────┐
        │  GENERATE PATCH IMAGE VECTOR           │
        │  REPRESENTING HEIGHT OF OBJECT         │
        │  ADJACENT TO BASE STATION FROM MAP     │ ~720
        │  DATA OF SURROUNDING AREA OF BASE      │
        │  STATION                               │
        └──────────────────┬─────────────────────┘
                           │
                           ▼
        ┌──────────────────────────────────────┐
        │  GENERATE FIRST INPUT VALUE TO BE      │
        │  INPUT TO FIRST DEEP NEURAL NETWORK    │ ~730
        │  TRAINED TO ESTIMATE POSITION OF UE    │
        └──────────────────┬─────────────────────┘
                           │
                           ▼
        ┌──────────────────────────────────────┐
        │  INPUT FIRST INPUT VALUE TO FIRST      │ ~740
        │  DEEP NEURAL NETWORK                   │
        └──────────────────┬─────────────────────┘
                           │
                           ▼
        ┌──────────────────────────────────────┐
        │  OBTAIN ESTIMATED UE POSITION VALUE    │ ~750
        │  OUTPUT FROM FIRST DEEP NEURAL NETWORK │
        └──────────────────┬─────────────────────┘
                           │
                           ▼
                    ┌─────────────┐
                    │     END     │
                    └─────────────┘
```

# FIG.7

START

PERFORM MULTI-HEAD ATTENTION OPERATION ON FIRST INPUT VALUE IN MULTI-HEAD ATTENTION LAYER ~810

OBTAIN FIRST OPERATION VALUE BY FIRST ADDING RESULT OF MULTI-HEAD ATTENTION OPERATION AND FIRST INPUT VALUE ~820

PERFORM NORMALIZATION ON FIRST OPERATION VALUE IN FIRST NORMALIZATION LAYER ~830

OBTAIN SECOND OPERATION VALUE BY ADDING NORMALIZED FIRST OPERATION VALUE AND FIRST OPERATION VALUE ~840

PERFORM NORMALIZATION ON SECOND OPERATION VALUE IN SECOND NORMALIZATION LAYER ~850

END

FIG.8

Base station 900

Communication unit 910

Processor 920

Storage unit 930

First deep neural network 933

Second deep neural network 936

FIG.9

## INTERNATIONAL SEARCH REPORT

| International application No. |
|---|
| **PCT/KR2024/005148** |

| A. | CLASSIFICATION OF SUBJECT MATTER |
|---|---|

**H04W 64/00**(2009.01)i; **H04W 24/08**(2009.01)i; **G06N 3/09**(2023.01)i; **G06N 3/045**(2023.01)i; **G01S 5/02**(2010.01)i; **G06T 7/70**(2017.01)i; **G06N 3/02**(2006.01)i; **H04B 17/27**(2015.01)i; **H04B 17/309**(2015.01)i

According to International Patent Classification (IPC) or to both national classification and IPC

| B. | FIELDS SEARCHED |
|---|---|

Minimum documentation searched (classification system followed by classification symbols)

H04W 64/00(2009.01); G06V 10/44(2022.01); G06V 10/74(2022.01); G16B 20/40(2019.01); G16B 30/00(2019.01); H04L 25/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 거리 및 각도(distance and angle), 객체(object), 높이 정보(height information), 심층 신경망(deep neural network), 위치 추정(position estimation)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | TSALOLIKHIN, Evgeny et al. A Single-Base-Station Localization Approach Using a Statistical Model of the NLOS Propagation Conditions in Urban Terrain. In: IEEE Transactions on Vehicular Technology. 04 February 2011, Vol. 60, Issue 3, pp. 1124-1137, E-ISSN: 1939-9359. See pages 1125-1135; and figure 8. | 1-5,7-12,14,15 |
| A | | 6,13 |
| Y | US 2004-0072577 A1 (MYLLYMAKI, Petri et al.) 15 April 2004 (2004-04-15) See paragraphs [0011]-[0036]; and claims 1 and 11. | 1-5,7-12,14,15 |
| Y | US 2023-0207054 A1 (ILLUMINA, INC.) 29 June 2023 (2023-06-29) See paragraphs [0048]-[0169]; and figure 12B. | 2,3,9,10 |
| Y | CN 116310425 A (SHANDONG UNIVERSITY) 23 June 2023 (2023-06-23) See paragraphs [0030]-[0032]. | 4,5,11,12 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 July 2024** | **25 July 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/005148** |

**C.    DOCUMENTS CONSIDERED TO BE RELEVANT**

| Category* | Citation of document, with indication, where appropriate, of the relevant passages | Relevant to claim No. |
| --- | --- | --- |
| Y | US 2022-0070028 A1 (QUALCOMM INC.) 03 March 2022 (2022-03-03)<br>See paragraphs [0007]-[0093]. | 7,14,15 |

Form PCT/ISA/210 (second sheet) (July 2022)

## INTERNATIONAL SEARCH REPORT
### Information on patent family members

International application No.

**PCT/KR2024/005148**

| Patent document cited in search report | | | Publication date (day/month/year) | Patent family member(s) | | | Publication date (day/month/year) |
|---|---|---|---|---|---|---|---|
| US | 2004-0072577 | A1 | 15 April 2004 | CN | 1483297 | A | 17 March 2004 |
| | | | | EP | 1354491 | A1 | 22 October 2003 |
| | | | | EP | 1354491 | B1 | 06 February 2008 |
| | | | | JP | 2004-517572 | A | 10 June 2004 |
| | | | | JP | 4029040 | B2 | 09 January 2008 |
| | | | | US | 7228136 | B2 | 05 June 2007 |
| | | | | WO | 02-054813 | A1 | 11 July 2002 |
| US | 2023-0207054 | A1 | 29 June 2023 | US | 2023-0207047 | A1 | 29 June 2023 |
| | | | | US | 2023-0207051 | A1 | 29 June 2023 |
| | | | | US | 2023-0207064 | A1 | 29 June 2023 |
| | | | | US | 2023-0207132 | A1 | 29 June 2023 |
| | | | | US | 2023-0223100 | A1 | 13 July 2023 |
| | | | | WO | 2023-129619 | A1 | 06 July 2023 |
| | | | | WO | 2023-129621 | A1 | 06 July 2023 |
| | | | | WO | 2023-129953 | A2 | 06 July 2023 |
| | | | | WO | 2023-129953 | A3 | 10 August 2023 |
| | | | | WO | 2023-129957 | A1 | 06 July 2023 |
| CN | 116310425 | A | 23 June 2023 | CN | 116310425 | B | 26 September 2023 |
| US | 2022-0070028 | A1 | 03 March 2022 | CN | 116113840 | A | 12 May 2023 |
| | | | | EP | 4208737 | A2 | 12 July 2023 |
| | | | | KR | 10-2023-0056016 | A | 26 April 2023 |
| | | | | WO | 2022-051127 | A2 | 10 March 2022 |
| | | | | WO | 2022-051127 | A3 | 21 April 2022 |

Form PCT/ISA/210 (patent family annex) (July 2022)